(19) Europäisches Patentamt
European Patent Office
Office européen des brevets

(11) **EP 3 580 515 B1**

(12) **FASCICULE DE BREVET EUROPEEN**

(45) Date de publication et mention de la délivrance du brevet:
**04.11.2020 Bulletin 2020/45**

(21) Numéro de dépôt: **18715772.2**

(22) Date de dépôt: **16.03.2018**

(51) Int Cl.:
*F28F 7/02* *(2006.01)*          *B22F 3/105* *(2006.01)*
*F28F 9/02* *(2006.01)*

(86) Numéro de dépôt international:
**PCT/FR2018/050639**

(87) Numéro de publication internationale:
**WO 2018/172672 (27.09.2018 Gazette 2018/39)**

(54) **ECHANGEUR DE CHALEUR COMPRENANT DES CONNECTEURS AVEC SUPPORTS**

WÄRMETAUSCHER MIT VERBINDERN MIT TRÄGERN

HEAT EXCHANGER COMPRISING CONNECTORS WITH SUPPORTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.03.2017 FR 1752488**

(43) Date de publication de la demande:
**18.12.2019 Bulletin 2019/51**

(73) Titulaire: **L'AIR LIQUIDE, Société Anonyme pour l'Etude
et l'Exploitation des Procédés Georges Claude
75007 Paris (FR)**

(72) Inventeurs:
• **FLIN, Matthieu
75018 Paris (FR)**

• **DUBET, Olivier
78530 Buc (FR)**
• **FAURE, Raphael
78470 Saint Rémy les Chevreuse (FR)**
• **DEL-GALLO, Pascal
91410 Dourdan (FR)**

(74) Mandataire: **Debecker, Isabelle Virginie
Air Liquide
Direction de la Propriete Intellectuelle
75, Quai d'Orsay
75321 Paris Cedex 07 (FR)**

(56) Documents cités:
WO-A1-2016/005676      WO-A1-2016/128647
US-A1- 2016 084 580      US-A1- 2016 116 218

## Description

La présente invention est relative aux échangeurs millistructurés d'un seul tenant, c'est-à-dire ne présentant pas d'interface d'assemblage.

Plus précisément, il est question d'échangeurs millistructurés mis en œuvre dans des procédés industriels qui nécessitent le fonctionnement de ces appareils à (i) un couple température/pression élevée, (ii) avec des pertes de charges minimales et (iii) permettant une intensification du procédé comme par exemple l'utilisation d'un échangeur à plaques compact pour préchauffer de l'oxygène utilisée dans le cadre d'un procédé d'oxycombustion. De manière plus spécifique, l'invention se rapporte à un échangeur d'un seul tenant permettant un transfert de chaleur entre un premier fluide et un second fluide comprenant de bas en haut en prenant le sens de fabrication :- une zone de distribution et ;- une zone de collection et ;- un connecteurs d'entrée et accolés à la zone de distribution et un connecteur de sortie et accolé à la zone de collection ;- au moins une entrée située sur chaque connecteur d'entrée ;- au moins une sortie située sur chaque connecteur de sortie ;- une zone d'échange permettant un transfert de chaleur entre les canaux du premier fluide et les canaux du second fluide, tel que divulgué par le document WO 2016/128647A1.

Un échangeur millistructuré est un échangeur pour lequel on retrouve les éléments comme les « étages », les « parois », les « zones de distribution » et « les zones de collection ». Les canaux des échangeurs millistructurés peuvent eux aussi être remplis de formes solides comme par exemple des mousses dans le but d'améliorer les échanges de chaleur. L'intégration thermique de ces appareils peut faire l'objet d'optimisations poussées permettant d'optimiser les échanges de chaleur entre les fluides circulant dans l'appareil à différentes températures grâce à une distribution spatiale des fluides sur plusieurs étages et l'utilisation de plusieurs distributeurs et collecteurs. Par exemple, les échangeurs millistructurés proposés pour le préchauffage de l'oxygène dans un four de verre sont composés d'une multitude de passages millimétriques disposés sur différents étages et qui sont formés grâce à des canaux liés les uns aux autres. Les canaux peuvent être alimentés en fluides chauds (c'est-à-dire à une température comprise entre 500 et 950°C) par un ou plusieurs distributeurs. Les fluides refroidis et chauffés sont acheminés en dehors de l'appareil par un ou plusieurs collecteurs.

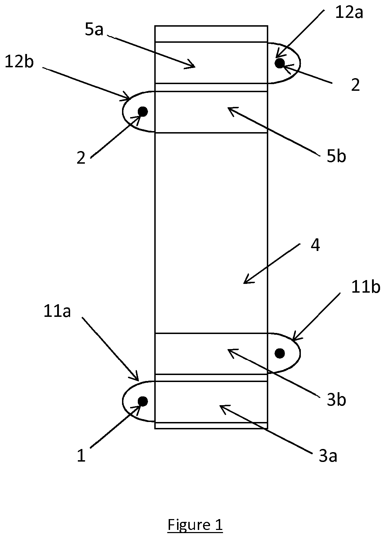

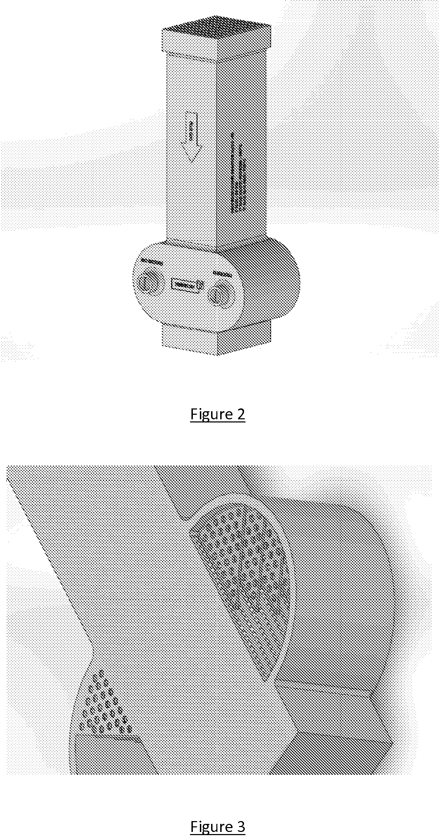

L'échangeur dont il est question dans cette invention est un ensemble d'un seul tenant, constitué de différentes parties, représentées par la figure 1 ou la figure 2. Par « échangeur d'un seul tenant » on entend un échangeur ne présentant pas d'interface d'assemblage. L'entrée 1 et la sortie 2 de l'échangeur sont reliés respectivement à des connecteurs d'entrée 11 et à des connecteurs de sortie 12 eux-mêmes directement reliés respectivement à une zone de distribution 3 et une zone de collection 5, qui alimente la zone d'échange 4. La zone d'échange 4 est constituée de canaux: on distingue les canaux de fluide chaud et les canaux de fluide froid.

Les connecteurs d'entrée 11 et de sortie 12 peuvent être définis comme un volume vide à au moins 50%, de préférence à au moins 70% et assurant respectivement la liaison entre l'entrée et la zone de distribution, et la zone de collection et la sortie.

Par « zone de distribution » on entend un volume organisé de manière à distribuer au mieux les flux entrant ou sortant des canaux de la zone d'échange.

Pour permettre la fabrication en une seule étape d'un échangeur tel que décrit ci-dessus, il est nécessaire que les connecteurs d'entrée et de sortie soient fabriqués par méthode additive en même temps que la zone de distribution et que la zone d'échange.

Cependant sauf à limiter les possibilités de positionnement ou la taille des connecteurs, aucune solution à l'heure actuelle n'existe pour permettre la fabrication des connecteurs en même temps que celle de la zone d'échange et de la zone de distribution.

Partant de là, un problème qui se pose est de fournir un échangeur amélioré et/ou un procédé amélioré permettant la fabrication des connecteurs en même temps que celle de la zone d'échange et de la zone de distribution.

Ce point est d'autant plus important que ces équipements peuvent être multifluides (plus de 2 fluides échangeant de la chaleur) et donc nécessité autant de connecteur d'entrée / sortie à disposer sur les différentes faces de l'échangeur.

Une solution de la présente invention est un échangeur d'un seul tenant permettant un transfert de chaleur entre un premier fluide et un second fluide comprenant de bas en haut en prenant le sens de fabrication :

- au moins deux zones de distribution 3a et 3b ;
- au moins deux zones de collection 5a et 5b ;
- au moins deux connecteurs d'entrée 11a et 11b accolés aux zones de distribution et au moins deux connecteurs de sortie 12 accolés aux zones de collection ;
- au moins une entrée 1 située sur chaque connecteur d'entrée ;
- au moins une sortie 2 située sur chaque connecteur de sortie ;
- une zone d'échange 4 permettant un transfert de chaleur entre les canaux du premier fluide et les canaux du second fluide;

avec chaque connecteur comprenant des supports dans leur partie supérieure interne.

Le premier fluide est généralement appelé fluide « chaud » et le second fluide est généralement appelé fluide « froid ».

Notons que les canaux dont il est question sont des canaux millimétriques.

Selon le cas, l'échangeur selon l'invention peut présenter une ou plusieurs des caractéristiques suivantes :

- ledit échangeur est un échangeur multi-fluide et la zone d'échange permet un transfert de chaleur entre les canaux d'au moins un premier fluide, d'un second fluide et d'un troisième fluide.
- ledit échangeur comprend au moins trois connecteurs d'entrée et/ou au moins trois connecteurs de sortie.
- chaque zone de distribution 3 comprend sur sa face accolée au connecteur d'entrée 11 des entrées de flux organisés suivant plusieurs axes verticaux; les supports compris dans la partie supérieure interne du connecteur d'entrée 11 ont une face accolée à la zone de distribution 3 et une face accolée à la face supérieure interne du connecteur d'entrée 11 ; et les supports sont intercalés entre lesdits différents axes verticaux.
- chaque zone de collection 5 comprend sur sa face accolée au connecteur de sortie 12 des sorties de flux organisés suivant plusieurs axes verticaux ; les supports compris dans la partie supérieure interne du connecteur de sortie 12 ont une face accolée à la zone de collection 5 et une face accolée à la face supérieure interne du connecteur de sortie 12 ; et les supports sont intercalés entre lesdits différents axes verticaux.
- les supports ont une forme de secteur de disque présentant un angle compris entre 30 et 60°, de préférence compris entre 40 et 50°.
- les connecteurs présentent un diamètre interne « D » et les supports en forme de secteur de disque présentent un rayon « d » tel que $\frac{1}{4}D \leq d \leq \frac{1}{3}D$.
- les supports présentent une porosité comprise entre 25 et 45%, de préférence une porosité comprise entre 35% et 45%.
- les supports présentent une épaisseur inférieure à 2 mm, de préférence inférieure à 1 mm, plus préférentiellement inférieure à 0,8 mm.
- les entrées de flux des zones de distribution et/ou les sorties de flux des zones de collection présentent un diamètre hydraulique compris entre 0,3 et 4 mm, de préférence 0,5 et 2 mm.
- ledit échangeur est fabriqué en un seul bloc par fabrication additive.

Les canaux de la zone d'échange se répartissent sur plusieurs étages. Il est entendu par « étage » un ensemble de canaux positionnés sur un même niveau. Les canaux sont séparés par des parois. Il est entendu par « paroi » une cloison de séparation entre deux canaux consécutifs. Le nombre de canaux, leurs dimensions et leurs dispositions sont déterminés pour pouvoir atteindre les performances attendues en termes de transfert de chaleur tout en respectant la perte de charge imposée. Les flux sont amenés dans les canaux via une zone dite de distribution. La zone de distribution permet une répartition homogène des flux entre les canaux qui lui sont accessibles.

La méthode de fabrication additive peut mettre en œuvre des poudres métalliques de taille micrométrique qui sont fondues par un ou plusieurs lasers afin de fabriquer des pièces finies de formes complexes en trois dimensions. La pièce se construit couche par couche, les couches sont de l'ordre de 50 μm, selon la précision des formes souhaitées et le taux de dépôt voulu. Le métal à fondre peut être apporté soit par lit de poudre ou soit par une buse d'aspersion. Les lasers utilisés pour fondre localement la poudre sont soit des lasers YAG, fibres ou CO2 et la fusion des poudres s'effectue sous gaz inerte (Argon, Hélium, etc.). La présente invention ne se limite pas à une seule technique de fabrication additive mais elle s'applique à l'ensemble des techniques connues.

Les techniques de fabrication additive permettent in fine d'obtenir des pièces dites « massives » qui à contrario des techniques d'assemblages telles que le brasage diffusion ou le soudage diffusion ne présentent pas d'interfaces d'assemblages entre chaque plaque gravée. Cette propriété va dans le sens de la tenue mécanique de l'appareil en éliminant par construction la présence de lignes de fragilisation et en éliminant par la-même une source de défaut potentiel. L'obtention de pièces massives par fabrication additive et l'élimination des interfaces de brasage ou de soudage diffusion permet d'envisager de nombreuses possibilités de design sans se limiter à des géométries de parois étudiées pour limiter l'impact d'éventuels défauts d'assemblage tels que des discontinuités dans le joints brasés ou dans les interfaces soudées-diffusées.

La fabrication additive permet de réaliser des formes inenvisageables par les méthodes de fabrication traditionnelles et ainsi la fabrication des connecteurs des échangeurs milli-structurés peut se faire dans la continuité de la fabrication du corps des appareils. Ceci permet alors de ne pas réaliser d'opération de soudage des connecteurs sur le corps et ainsi d'éliminer une source d'altération de l'intégrité structurelle de l'équipement.

Les supports dans la partie supérieure interne des connecteurs permettent d'assurer la fabrication des connecteurs de l'échangeur par méthode additive sans se limiter sur la position des connecteurs au niveau de l'échangeur. En effet, on remarque à l'aide de la figure 1 la possibilité d'avoir des connecteurs à différents endroits de l'échangeur.

Les supports doivent être positionnés dans les connecteurs là où la fabrication par méthode additive va nécessiter un supportage. Par exemple dans le cas d'un échangeur fabriqué à la verticale par méthode additive tel que présenté sur la Figure 2. Par souci de simplicité sur la figure 2 deux connecteurs uniquement sont représentés. Les supports des connecteurs sont situés dans la partie supérieure interne des connecteurs.

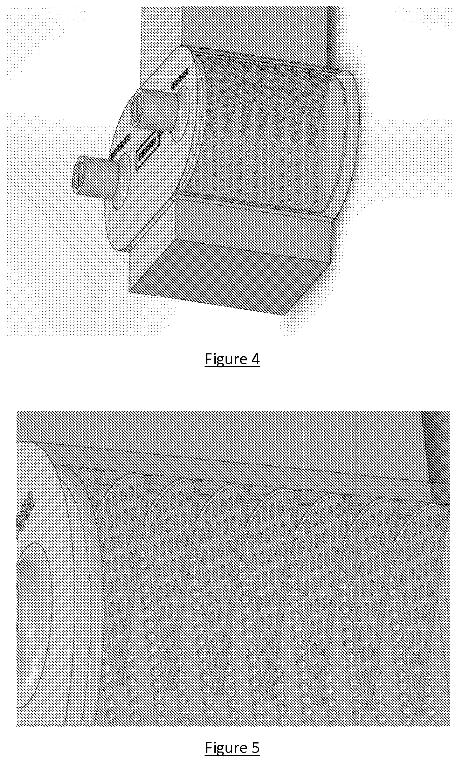

Pour impacter au minimum le procédé de fabrication et ne pas perturber la circulation des flux, leur distribution et leur collection au niveau des entrées et sorties de flux de la zone de distribution et de la zone de collection, les supports se positionnent entre les entrées et sorties, ce qui impose leur épaisseur (cf. Figures 3, 4 et 5).

D'autre part, pour ne pas perturber la circulation des flux les supports sont de préférence aérées et présentent une porosité élevée comprise entre 25 et 45%, avec une valeur idéale de 40% (calculé comme le rapport du volume de l'ensemble des trous des supports sur le volume total occupé par un support).

La présente invention a également pour objet un procédé d'oxycombustion mettant en œuvre un échangeur selon l'une des revendications pour préchauffer de l'oxygène.

## Revendications

1. Echangeur d'un seul tenant permettant un transfert de chaleur entre un premier fluide et un second fluide comprenant de bas en haut en prenant le sens de fabrication :

   - au moins deux zones de distribution (3a) et (3b) ;
   - au moins deux zones de collection (5a) et (5b) ;
   - au moins deux connecteurs d'entrée (11a) et (11b) accolés aux zones de distribution et au moins deux connecteurs de sortie (12a) et (12b) accolés aux zones de collection ;
   - au moins une entrée (1) située sur chaque connecteur d'entrée ;
   - au moins une sortie (2) située sur chaque connecteur de sortie ;
   - une zone d'échange (4) permettant un transfert de chaleur entre les canaux du premier fluide et les canaux du second fluide;

   avec chaque connecteur comprenant des supports dans leur partie supérieure interne.

2. Echangeur selon la revendication 1, **caractérisé en ce que** ledit échangeur est un échangeur multi-fluide et la zone d'échange permet un transfert de chaleur entre les canaux d'au moins un premier fluide, d'un second fluide et d'un troisième fluide.

3. Echangeur selon la revendication 2, **caractérisé en ce que** ledit échangeur comprend au moins trois connecteurs d'entrée et/ou au moins trois connecteurs de sortie.

4. Echangeur selon l'une des revendications 1 à 3, **caractérisé en ce que** :

   - chaque zone de distribution (3) comprend sur sa face accolée au connecteur d'entrée (11) des entrées de flux organisés suivant plusieurs axes verticaux ;
   - les supports compris dans la partie supérieure interne du connecteur d'entrée (11) ont une face accolée à la zone de distribution (3) et une face accolée à la face supérieure interne du connecteur d'entrée (11) ; et
   - les supports sont intercalés entre lesdits différents axes verticaux.

5. Echangeur selon l'une des revendications 1 à 4, **caractérisé en ce que** :

   - chaque zone de collection (5) comprend sur sa face accolée au connecteur de sortie (12) des sorties de flux organisés suivant plusieurs axes verticaux ;
   - les supports compris dans la partie supérieure interne du connecteur de sortie (12) ont une face accolée à la zone de collection 5 et une face accolée à la face supérieure interne du connecteur de sortie (12) ; et
   - les supports sont intercalés entre lesdits différents axes verticaux.

6. Echangeur selon l'une des revendications 1 à 5, **caractérisé en ce que** les supports ont une forme de secteur de disque présentant un angle compris entre 30 et 60°, de préférence compris entre 40 et 50°.

7. Echangeur selon la revendication 6, **caractérisé en ce que** les connecteurs présentent un diamètre interne « D » et les supports en forme de secteur de disque présentent un rayon « d » tel que

$$\frac{1}{4}D \le d \le \frac{1}{3}D.$$

8. Echangeur selon l'une des revendications 1 à 7, **caractérisé en ce que** les supports présentent une porosité comprise entre 25 et 45%, de préférence une porosité comprise entre 35% et 45%.

9. Echangeur selon l'une des revendications 1 à 8, **caractérisé en ce que** les supports présentent une épaisseur inférieure à 2 mm, de préférence inférieure à 1 mm, plus préférentiellement inférieure à 0,8 mm.

10. Echangeur selon l'une des revendications 1 à 9, **caractérisé en ce que** les entrées de flux des zones de distribution et/ou les sorties de flux des zones de collection présentent un diamètre hydraulique compris entre 0,3 et 4 mm, de préférence 0,5 et 2 mm.

11. Echangeur selon l'une des revendications 1 à 10, **caractérisé en ce que** ledit échangeur est fabriqué en un seul bloc par fabrication additive.

12. Procédé d'oxycombustion mettant en œuvre un échangeur selon l'une des revendications 1 à 11, pour préchauffer de l'oxygène.

**Patentansprüche**

1. Tauscher aus einem einzigen Stück, der die Wärmeübertragung zwischen einem ersten Fluid und einem zweiten Fluid ermöglicht, umfassend von unten nach oben in der Herstellungsrichtung:

   - mindestens zwei Verteilungszonen (3a) und (3b);
   - mindestens zwei Sammelzonen (5a) und (5b);
   - mindestens zwei Einlassanschlüsse (11a) und (11b), die an die Verteilungszonen angefügt sind, und mindestens zwei Auslassanschlüsse (12a) und (12b), die an die Sammelzonen angefügt sind;
   - mindestens einen Einlass (1), der sich an jedem Einlassanschluss befindet;
   - mindestens einen Auslass (2), der sich an jedem Auslassanschluss befindet;
   - eine Austauschzone (4), die eine Wärmeübertragung zwischen den Kanälen des ersten Fluids und den Kanälen des zweiten Fluids ermöglicht;

   wobei jeder Anschluss Träger in seinem inneren oberen Teil umfasst.

2. Tauscher nach Anspruch 1, **dadurch gekennzeichnet, dass** der Tauscher ein Mehrfluidtauscher ist und die Austauschzone eine Wärmeübertragung zwischen den Kanälen von mindestens einem ersten Fluid, einem zweiten Fluid und einem dritten Fluid ermöglicht.

3. Tauscher nach Anspruch 2, **dadurch gekennzeichnet, dass** der Tauscher mindestens drei Einlassanschlüsse und / oder mindestens drei Auslassanschlüsse umfasst.

4. Tauscher nach einem der Ansprüche 1 bis 3, **dadurch gekennzeichnet, dass**:

   - jede Verteilungszone (3) auf ihrer Seite, die an den Einlassanschluss (11) angefügt ist, Strömungseinlässe umfasst, die entlang mehrerer vertikaler Achsen angeordnet sind;
   - die im oberen inneren Teil des Einlassanschlusses (11) umfassten Träger eine Seite, die an die Verteilungszone (3) angefügt ist, und eine Seite haben, die an die innere obere Seite des Einlassanschlusses (11) angefügt ist; und
   - die Träger zwischen den verschiedenen vertikalen Achsen eingefügt sind.

5. Tauscher nach einem der Ansprüche 1 bis 4, **dadurch gekennzeichnet, dass**:

   - jede Sammelzone (5) auf ihrer Seite, die an den Auslassanschluss (12) angefügt ist, Strömungsauslässe umfasst, die entlang mehrerer vertikaler Achsen angeordnet sind;
   - die im oberen inneren Teil des Auslassanschlusses (12) umfassten Träger eine Seite, die an die Sammelzone 5 angefügt ist, und eine Seite haben, die an die innere obere Seite des Auslassanschlusses (12) angefügt ist; und
   - die Träger zwischen den verschiedenen vertikalen Achsen eingefügt sind.

6. Tauscher nach einem der Ansprüche 1 bis 5, **dadurch gekennzeichnet, dass** die Träger die Form eines Scheibensektors mit einem Winkel zwischen 30 und 60°, vorzugsweise zwischen 40 und 50° aufweisen.

7. Tauscher nach Anspruch 6, **dadurch gekennzeichnet, dass** die Anschlüsse einen Innendurchmesser "D" aufweisen, und dass die Träger in Form eines Scheibensektors einen Radius "d" ausweisen, so dass $\frac{1}{4}D \leq d \leq \frac{1}{3}D$.

8. Tauscher nach einem der Ansprüche 1 bis 7, **dadurch gekennzeichnet, dass** die Träger eine Porosität zwischen 25 und 45 %, vorzugsweise eine Porosität zwischen 35 % und 45 %, aufweisen.

9. Tauscher nach einem der Ansprüche 1 bis 8, **dadurch gekennzeichnet, dass** die Träger eine Dicke von weniger als 2 mm, bevorzugt weniger als 1 mm, bevorzugter weniger als 0,8 mm, aufweisen.

10. Tauscher nach einem der Ansprüche 1 bis 9, **dadurch gekennzeichnet, dass** die Strömungseinlässe der Verteilungszonen und / oder die Strömungsauslässe der Sammelzonen einen hydraulischen Durchmesser zwischen 0,3 und 4 mm, vorzugsweise 0,5 und 2 mm, aufweisen.

11. Tauscher nach einem der Ansprüche 1 bis 10, **dadurch gekennzeichnet, dass** der Tauscher durch additive Fertigung aus einem einzigen Block hergestellt wird.

12. Verfahren zur Sauerstoffverbrennung unter Verwendung eines Tauschers nach einem der Ansprüche 1 bis 11 zum Vorheizen des Sauerstoffs.

**Claims**

1. Single-piece exchanger allowing the transfer of heat between a first fluid and a second fluid, comprising, from bottom to top when considering the direction of manufacture:

- at least two distribution zones (3a) and (3b);
- at least two collection zones (5a) and (5b);
- at least two inlet connectors (11a) and (11b) adjoining the distribution zones and at least two outlet connectors (12a) and (12b) adjoining the collection zones;
- at least one inlet (1) situated on each inlet connector;
- at least one outlet (2) situated on each outlet connector;
- an exchange zone (4) allowing a transfer of heat between the canals for the first fluid and the canals for the second fluid;

with each connector comprising supports in their internal upper part.

2. Exchanger according to claim 1, **characterised in that** said exchanger is a multifluid exchanger and the exchange zone allows a transfer of heat between the canals of at least one first fluid, a second fluid and a third fluid.

3. Exchanger according to claim 2, **characterised in that** said exchanger comprises at least three inlet connectors and/or at least three outlet connectors.

4. Exchanger according to one of claims 1 to 3, **characterised in that**:

 - each distribution zone (3) comprises on its face adjoining the inlet connector (11) of the flow inlets organised along several vertical axes;
 - the supports comprised in the internal upper part of the inlet connector (11) have a face adjoining the distribution zone (3) and a face adjoining the internal upper face of the inlet connector (11); and
 - the supports are inserted between said different vertical axes.

5. Exchanger according to one of claims 1 to 4, **characterised in that**:

 - each collection zone (5) comprises on its face adjoining the outlet connector (12) of the flow outlets organised along several vertical axes;
 - the supports comprised in the internal upper part of the outlet connector (12) have a face adjoining the collection zone (5) and a face adjoining the internal upper face of the outlet connector (12); and
 - the supports are inserted between said different vertical axes.

6. Exchanger according to one of claims 1 to 5, **characterised in that** the supports have a shape of a disk sector having an angle comprised between 30 and 60°, preferably comprised between 40 and 50°.

7. Exchanger according to claim 6, **characterised in that** the connectors have an internal diameter "D" and the supports in the shape of a disk sector have a radius "d" such that $1/4\ D \le d \le 1/3\ D$.

8. Exchanger according to one of claims 1 to 7, **characterised in that** the supports have a porosity comprised between 25 and 45%, preferably a porosity comprised between 35 and 45%.

9. Exchanger according to one of claims 1 to 8, **characterised in that** the supports have a thickness less than 2mm, preferably less than 1mm, more preferably less than 0.8mm.

10. Exchanger according to one of claims 1 to 9, **characterised in that** the flow inlets of the distribution zones and/or the flow outlets of the collection zones have a hydraulic diameter comprised between 0.3 and 4mm, preferably 0.5 and 2mm.

11. Exchanger according to one of claims 1 to 10, **characterised in that** said exchanger is manufactured in one single block by additive manufacturing.

12. Oxycombustion method implementing an exchanger according to one of claims 1 to 11, to preheat the oxygen.

Figure 1

Figure 2

Figure 3

Figure 4

Figure 5

## RÉFÉRENCES CITÉES DANS LA DESCRIPTION

**Documents brevets cités dans la description**

- WO 2016128647 A1